# EUROPÄISCHE PATENTSCHRIFT

(11) **EP 2 374 667 B1**
(45) Veröffentlichungstag und Bekanntmachung des Hinweises auf die Patenterteilung: **06.06.2012**
(21) Anmeldenummer: 11002178.9
(22) Anmeldetag: 16.03.2011
(51) Int. Cl.: B60R 21/13, E01C 19/28, E02F 9/16

(54) **Schwenkbarer Überrollbügel**
Pivotable roll-bar
Arceau de sécurité basculant

(30) Priorität: 09.04.2010 DE 202010004753 U
(43) Veröffentlichungstag der Anmeldung: 12.10.2011
(73) Patentinhaber: BOMAG GmbH, 56154 Boppard (DE)
(72) Erfinder: Dünchel, Diana, 56626 Andernach (DE); Bender, Matthias, 55494 Rheinböllen (DE); Darscheid, Thomas, 56154 Boppard (DE)
(74) Vertreter: Lang, Friedrich

(56) Entgegenhaltungen:
- DE-A1- 19 546 425
- DE-A1-102004 014 475

## Beschreibung

Die Erfindung betrifft einen Überrollbügel für eine kabinenlose Baumaschine, insbesondere eine Vibrationswalze, welcher zwischen einer Arbeitsstellung und einer Transportstellung höhenverstellbar ausgebildet ist. Der erfindungsgemäße Überrollbügel umfasst gemäß dem Oberbegriff des Anspruchs 1 einen schwenkbaren Rohrbügel, welcher zwei vertikale Schwenkrohre umfasst, zwei Standrohre, welche mit dem Rahmen der Baumaschine ortsfest verbunden sind, und zwei Verbindungsglieder, über welche die Schwenkrohre mit den Standrohren verbunden sind. Die Verbindungsglieder umfassen jeweils eine Anschlagsfläche, an welcher das Schwenkrohr in der Arbeitsposition anlegbar ist, eine Arretierung, mit welcher das Schwenkrohr in der Arbeitsposition gegen das Verbindungsglied verspannbar ist, eine Schweißfläche, an welcher das Standrohr stoffschlüssig verbunden ist, und ein Schwenkgelenk mit einer Schwenkachse, um welche die Schwenkrohre schwenkbar sind.

Baumaschinen sind mit Überschlagschutzeinrichtungen bzw. Überrollbügeln ausgestattet, die am Maschinenrahmen befestigt sind und sich nach oben erstrecken, um eine Bedienungsperson im Falle eines Überschlagens der Maschine zu schützen. Ist die Baumaschine mit einer Fahrerkabine ausgestattet, wird der Überrollbügel normalerweise in die Fahrerkabine integriert. Wird die Baumaschine hingegen ohne Fahrerkabine ausgeführt, was oft bei kleineren Baumaschinen der Fall ist, wird der Überrollbügel normalerweise alleinstehend ausgebildet, wobei der Überrollbügel im Allgemeinen als U-förmiger Bügel ausgeführt wird, dessen freie Enden am Maschinenrahmen befestigt werden und dessen Querträger im Wesentlichen über dem Kopf der Bedienungsperson angeordnet ist. Dadurch ist der Überrollbügel häufig derjenige Teil der Baumaschine, der sich am weitesten nach oben erstreckt.

Solch ein nach oben auskragender Überrollbügel kann zum Beispiel beim Verladen und beim Transport der Baumaschine nachteilig sein. Um dieses Problem zu überwinden, sind Überrollbügel mit Klappmechanismen bekannt, die es erlauben, einen oberen Bereich des Überrollbügels abzuschwenken und somit die Höhe der Baumaschine zu reduzieren. Diese Klappmechanismen weisen im Allgemeinen Arretierungen auf, wodurch das obere Segment des Überrollbügels im hochgeschwenkten Zustand gegen das untere ortsfeste Segment des Überrollbügels arretiert werden kann. Bekannt sind schwenkbare Überrollbügel, bei denen das obere schwenkbare Segment mittels zwei Bolzen mit dem unteren, ortsfesten Segment verbunden wird. Dabei dient ein Bolzen als Scharnier, welches ortsfest zwischen den beiden Segmenten angeordnet ist. Der andere Bolzen kann entfernt werden und erlaubt dadurch ein Abschwenken des oberen Segmentes. Der Arretierungsbolzen ist hierbei parallel zur Schwenkachse des Scharniers ausgebildet. Nachteilig wirkt sich hierbei aus, dass eine solche Arretierung durch Verbolzung spielbehaftet ist und im Falle von betriebsbedingt auftretenden Vibrationen das obere Segment des Überrollbügels ausschlägt. Des Weiteren ist eine derartige Verbindung aufwendig herzustellen.

Um dieses Problem zu überwinden, gibt es Konstruktionen, bei denen das obere Segment des Überrollbügels anstelle eines Bolzens durch mehrere Schraubverbindungen arretiert wird. Nachteilig ist hierbei, dass das Entfernen der Schrauben zum Abschwenken des oberen Segmentes des Überrollbügels nur durch Verwendung von Werkzeug möglich ist. Weiterhin werden die Schrauben zum Abschwenken des oberen Segmentes komplett vom Überrollbügel entfernt und können leicht verloren gehen. Auch muss die Schraubverbindung mit einem vorgegebenen Anzugsmoment hergestellt werden und kann somit nur von geschultem Personal ausgeführt werden.

Aus der DE 10 2004 014 475 A1 ist ein schwenkbarer Überrollbügel mit den Merkmalen der Oberbegriff des Auspruchs 1 bekannt, welcher die genannten Nachteile des Standes der Technik erfolgreich überwindet. Es besteht dennoch Bedarf an einer Weiterentwicklung dieses Überrollbügels, um so das Gewicht und die Kosten weiter reduzieren zu können.

Der Erfindung liegt daher die Aufgabe zugrunde, einen schwenkbaren Überrollbügel für eine kabinenlose Baumaschine, insbesondere eine Vibrationswalze, bereitzustellen, welcher bei höchster Sicherheit gewichts- und kostensparend ausgeführt ist.

Diese Aufgabe wird erfindungsgemäß dadurch gelöst, dass die Verbindungsglieder je zwei Blechteile, welche einander symmetrisch sind, umfassen, wobei die Anschlagflächen und die Schweißflächen als Kantprofile der Blechteile ausgebildet sind und wobei die Schweißflächen im Wesentlichen horizontal ausgerichtet sind.

Vorteilhafte Ausgestaltungen der Erfindung sind in den abhängigen Ansprüchen angegeben.

Der Erfindung liegt die Erkenntnis zugrunde, dass mit Hilfe der Verbindungsglieder, welche je zwei einander symmetrische Blechteile umfassen, Gewichts- und Kostenvorteile gegenüber der Verwendung von massiven U-förmigen Rohrabschnitten, beispielsweise bekannt aus der DE 10 2004 014 475 A1, erzielt werden können. Die erfindungsgemäßen Blechteile sind bezüglich einer Bezugslinie, z. B. der Längsmittelachse des Schwenkrohres, symmetrisch zueinander und ergeben durch ihr Zusammenwirken das erfindungsgemäße Verbindungsglied. Da die Blechteile leicht durch Stanzen herstellbar sind, entfallen hohe Fertigungskosten infolge von spanenden Fertigungsverfahren, die bei herkömmlichen Verbindungsgliedern erforderlich sind.

Dadurch, dass die Anschlagflächen und die Schweißflächen als Kantprofile der Blechteile ausgebildet sind, können Teile eingespart werden, welche herkömmlich als separate Teile an die Verbindungsglieder angeschweißt wurden. Dies spart nicht nur Gewicht und Kosten, sondern erhöht auch die Sicherheit des Überrollbügels, da Schweißverzüge reduziert werden. Schweißverzüge infolge von Schweißarbeiten an den Verbindungsgliedern werden erfindungsgemäß dadurch umgangen, dass zum einen Anschweißteile weitestgehend durch Kantprofile ersetzt werden und zum anderen die durch Kanten gebildeten Schweißflächen im Wesentlichen horizontal ausgerichtet sind, auf die die anzuschweißenden Teile, nämlich die Standrohre, stumpf aufgesetzt werden können. Als Kantprofil wird in diesem Zusammenhang ein Abschnitt des Blechteils verstanden, welches durch einfaches Kanten des ausgestanzten Blechrohteils gebildet ist.

In einer vorteilhaften Weiterbildung der Erfindung sind die Schwenkgelenke derart ausgebildet, dass die Schwenkachse durch die Schwenkrohre hindurch verläuft. Dies spart zusätzlich Gewicht und Kosten, da kein separates Drehgelenk vorgesehen werden muss. Stattdessen wird das Drehgelenk erfindungsgemäß durch eine Bohrung durch das Schwenkrohr, eine Bohrung durch das Verbindungsglied und eine einfache Schraube, welche durch die Bohrungen durchgeführt und endseitig, beispielsweise durch eine einfache Schraubenmutter gesichert ist, realisiert.

In einer weiteren Ausführungsform sind die Verbindungsglieder mittels Schweißnähte stoffschlüssig mit den Standrohren verbunden, wobei die Schweißnähte zumindest teilweise umlaufende Kehlnähte oder Stumpfnähte sind und wobei sie bezüglich der Mittelpunkte der Schweißflächen symmetrisch angeordnet sind. Damit können Schweißverzüge weitestgehend unterdrückt werden.

In einer bevorzugten Ausführungsform der Erfindung weist die Arretierung einen Klemmriegel und eine Arretierschraube auf, wobei der Klemmriegel und die Arretierschraube schwenkrohrseitig angeordnet sind. Hierdurch wird eine spielfreie und bequeme Arretierung des in die Arbeitsstellung gebrachten Rohrbügels sichergestellt, wobei ein Verlust des Klemmriegels und der Arretierschraube infolge von Unachtsamkeit ausgeschlossen wird.

In einer weiteren Ausführungsform weisen die Verbindungsglieder im Bereich der Klemmriegel Aussparungen auf, wobei die Aussparungen derart ausgebildet sind, dass die Klemmriegel in der Arbeitsstellung die Schwenkrohre gegen die Verbindungsglieder verspannen und in der Transportstellung die Schwenkrohre freigeben. Dies ermöglicht einen einfachen Wechsel von der Arbeitsstellung (aufgeklappter Rohrbügel) zur Transportstellung (heruntergeklappter Rohrbügel) des Überrollbügels ohne zusätzliches Werkzeug etc.

In einer weiteren vorteilhaften Weiterbildung weisen die Standrohre Dämpfungselemente im Bereich der Verbindung zum Rahmen der Baumaschine auf. Diese Dämpfungsmittel können beispielsweise Elastomere sein. Damit können die von der Baumaschine ausgehenden Vibrationen, die bei Dauerbelastung zu Gesundheitsschäden führen können, wirksam reduziert werden.

Bevorzugte Ausführungsformen der Erfindung werden im Folgenden anhand der beigefügten Zeichnungen näher erläutert. Es zeigen schematisch:
- Fig. 1: eine perspektivische Teilansicht einer kabinenlosen Vibrationswalze mit einem schwenk- baren Überrollbügel in der Arbeitsstellung;
- Fig. 2: eine perspektivische Teilansicht auf den Gelenkbereich eines herkömmlichen, schwenk- baren Überrollbügels;
- Fig. 3: eine Seitenansicht des erfindungsgemäßen, schwenkbaren Überrollbügels in der Arbeits- stellung;
- Fig. 4: eine Ansicht des Überrollbügels aus Fig. 3 in Blickrichtung B-B;
- Fig. 5: eine perspektivische Ansicht eines Verbindungsglieds mit nur einem Blechteil; und
- Fig. 6: eine perspektivische Ansicht eines Verbindungsglieds mit zwei einander symmetrischen Blechteilen.

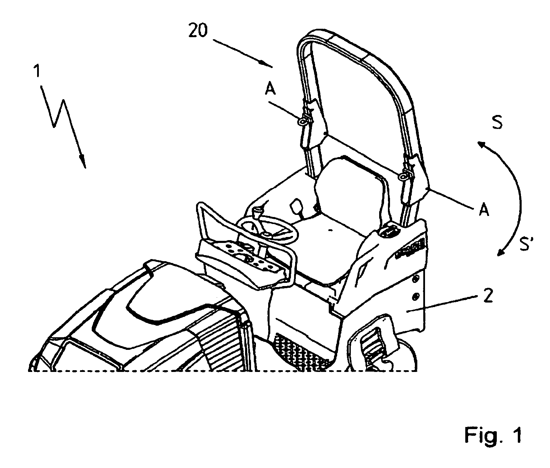

Figur 1 zeigt einen Teil einer kabinenlosen Baumaschine 1, welche einen erfindungsgemäßen Überrollbügel 20 aufweist. Der Überrollbügel 20 ist am Rahmen 2 der Baumaschine 1 angeordnet. Der obere Teil des Überrollbügels lässt sich in Richtung der Pfeile S und S' zwischen einer Arbeitsstellung und einer Transportstellung um die Schwenkachse A schwenken.

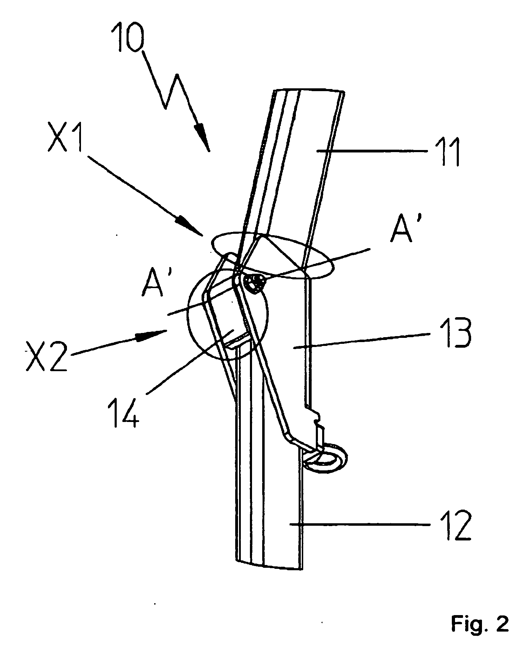

Figur 2 zeigt einen herkömmlichen, schwenkbaren Überrollbügel 10 aus dem Stand der Technik, wie beispielsweise aus DE 10 2004 014 475 A1. Die massive, aus einem U-förmigen Rohrabschnitt bestehende Gelenkversteifung 13 sorgt für eine um die Drehachse A' schwenkbare Verbindung des oberen Holms 11 in Bezug auf den ortsfesten Holm 12. Dazu ist der obere Holm 11 im Bereich X1 mit der Gelenkversteifung 13 verschweißt. Ein als Anschlag und Drehgelenk ausgebildetes, separates Bauteil 14 ist im Bereich X2 mit dem ortsfesten Holm 12 verschweißt. Dadurch entstehen Schweißverzüge nicht nur in der Gelenkversteifung 13, sondern auch in den Holmen 11, 12.

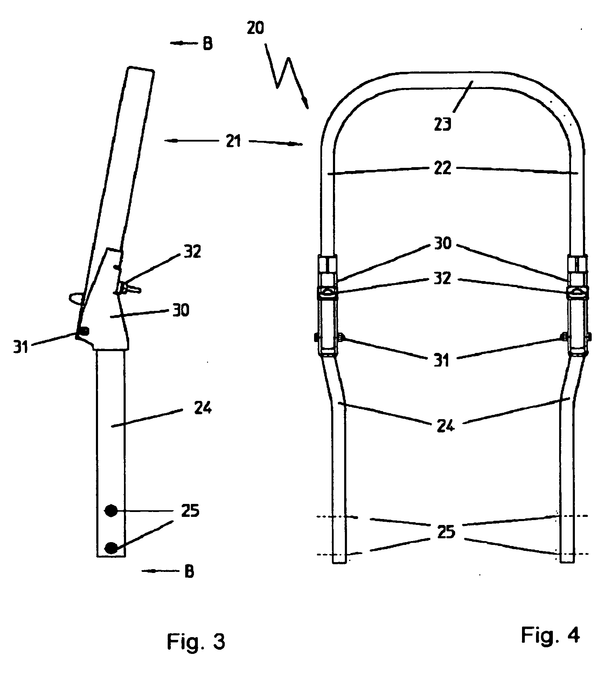

Figuren 3 bis 6 zeigen verschiedene Ansichten einer Ausführungsform des erfindungsgemäßen Überrollbügels 20. Der erfindungsgemäße Überrollbügel umfasst einen schwenkbaren Rohrbügel 21, welcher zwei Schwenkrohre 22 und ein diese miteinander verbindendes Querrohr 23 umfasst. Wie im gezeigten Beispiel, sind die Schwenkrohre 22 und das Querrohr 23 vorzugsweise einstückig als ein Rohrbügel 21 ausgeführt, um weitere Material- und Herstellungskosten einzusparen. Der Rohrbügel 21 ist über zwei Verbindungsglieder 30 schwenkbar mit den beiden Standrohren 24 verbunden. Die Standrohre 24 sind über Bohrungen 25 ortsfest mit dem Rahmen 2 der Baumaschine 1 verbunden.

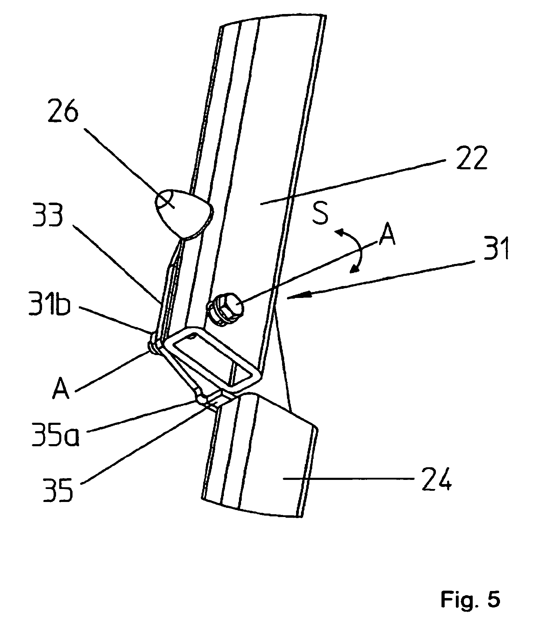

Jedes Verbindungsglied 30 umfasst ein Drehgelenk 31 mit einer Schwenkachse A. Dabei ist das Drehgelenk 31 derart ausgebildet, dass die Schwenkachse A durch das Schwenkrohr 22 hindurch verläuft (Fig. 5). Dadurch kann ein separates Bauteil 14 (Fig. 2) entfallen. Das erfindungsgemäße Drehgelenk 31 wird in einfacher Weise mit Hilfe einer Schraube 31 a, welche in entsprechenden Bohrungen im Schwenkrohr 22 und im Verbindungsglied 30 aufgenommen ist und über eine Schraubenmutter 31 b vor Herausfallen gesichert ist, realisiert. Gummipuffer 26 sorgen für einen sanften Aufprall und für einen Sicherheitsabstand zwischen dem Schwenkrohr 22 und dem Standrohr 24, falls sich der Überrollbügel 20 in der Transportstellung befindet.

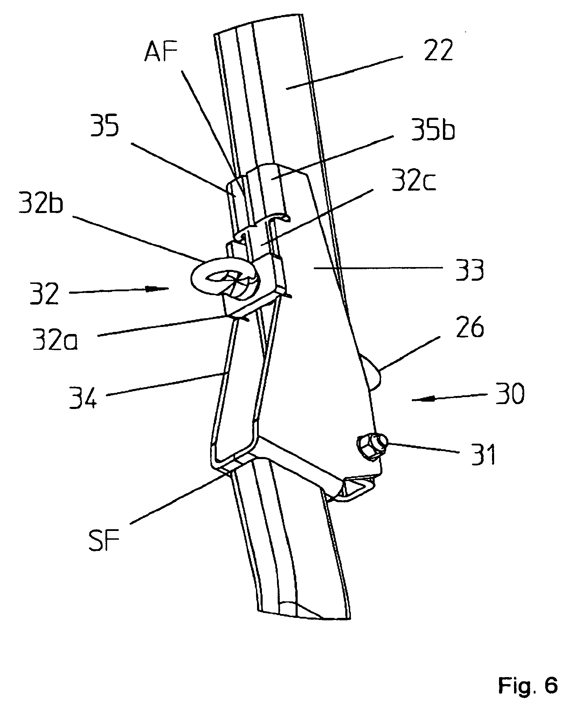

Die Arretierung 32, wie in Fig. 6 dargestellt, weist einen Klemmriegel 32a und eine Arretierschraube 32b, beispielsweise eine Ringschraube, auf, wobei die Arretierung 32 in der Arbeitsstellung das Schwenkrohr 22 gegen das Verbindungsglied 30 verspannt. Wenn der Überrollbügel 20 in die Transportstellung gebracht werden soll, kann die Schraube 32b gelockert und der Klemmriegel 32a um 90° gedreht werden, so dass der Klemmriegel 32a in die Aussparung 32c passt. So kann das Schwenkrohr 22 um die Schwenkachse A nach unten geschwenkt werden. Dabei bleiben der Klemmriegel 32a und die Arretierschraube 32b schwenkrohrseitig befestigt, so dass sie nicht verlorengehen können.

In Figuren 5 und 6 ist gezeigt, wie die Anschlagflächen AF und die Schweißflächen SF als Kantprofile 35 der Blechteile 33, 34 gebildet sind. Dazu werden die ausgestanzten Blechrohteile an den Stellen 35a, 35b gekantet. An der Anschlagfläche AF kommen das Schwenkrohr 22 zum Anliegen, wenn sich der Überrollbügel 20 in der Arbeitsstellung befindet. Es muss kein separates Anschlagelement an das Verbindungsglied 30 angeschweißt werden. Dadurch wird Material, Gewicht und Arbeitsaufwand reduziert. Zudem wird Schweißverzug an dieser Stelle vermieden. Durch die Ausbildung der Schweißfläche SF als Kantprofil 35 und durch die horizontale Ausrichtung der Schweißfläche SF kann das Verbindungsglied 30 stumpf auf das Standrohr 24 aufgesetzt und beispielsweise umlaufend verschweißt werden. Durch diese Schweißart wird effektiv der Schweißverzug vermieden. Die Schweißnaht (nicht dargestellt) kann aber auch nur teilweise umlaufend gestaltet sein. Wichtig ist dabei, dass die Schweißnähte bezüglich des Mittelpunktes der Schweißfläche SF symmetrisch angeordnet werden, damit eine symmetrische Belastung der Schweißfläche SF stattfinden kann. Damit wird der Schweißverzug wirksam gemindert.

## Patentansprüche

1. Überrollbügel (20) für eine kabinenlose Baumaschine (1), insbesondere eine Vibrationswalze, welcher zwischen einer Arbeitsstellung und einer Transportstellung höhenverstellbar ausgebildet ist, umfassend:
einen schwenkbaren Rohrbügel (21), welcher zwei vertikale Schwenkrohre (22) umfasst; zwei Standrohre (24), welche mit dem Rahmen (2) der Baumaschine (1) ortsfest verbunden sind;
zwei Verbindungsglieder (30), über welche die Schwenkrohre (22) mit den Standrohren (24) verbunden sind, wobei die Verbindungsglieder (30) jeweils umfassen:
eine Anschlagsfläche (AF), an welcher das Schwenkrohr (22) in der Arbeitsposition anlegbar ist;
eine Arretierung (32), mit welcher das Schwenkrohr (22) in der Arbeitsposition gegen das Verbindungsglied (30) verspannbar ist;
eine Schweißfläche (SF), an welcher das Standrohr (24) stoffschlüssig verbunden ist;
und ein Schwenkgelenk (31) mit einer Schwenkachse (A), um welche die Schwenkrohre (22) schwenkbar sind,
**dadurch gekennzeichnet,**
**dass** die Verbindungsglieder (30) je zwei Blechteile (33, 34), welche einander symmetrisch sind, umfassen, wobei die Anschlagflächen (AF) und die Schweißflächen (SF) als Kantprofil (35) der Blechteile (33, 34) ausgebildet sind und wobei die Schweißflächen (SF) im Wesentlichen horizontal ausgerichtet sind.

2. Überrollbügel (20) gemäß Anspruch 1,
**dadurch gekennzeichnet,**
**dass** die Schwenkgelenke (31) derart ausgebildet sind, dass die Schwenkachse (A) durch die Schwenkrohre (22) hindurch verläuft.

3. Überrollbügel (20) gemäß einem der vorhergehenden Ansprüche,
**dadurch gekennzeichnet,**
**dass** die Verbindungsglieder (30) mittels Schweißnähte stoffschlüssig mit den Standrohren (24) verbunden sind, wobei die Schweißnähte zumindest teilweise umlaufende Kehlnähte oder Stumpfnähte sind und wobei sie bezüglich der Mittelpunkte der Schweißflächen (SF) symmetrisch angeordnet sind.

4. Überrollbügel (20) gemäß einem der vorhergehenden Ansprüche,
**dadurch gekennzeichnet,**
**dass** die Arretierung (32) einen Klemmriegel (32a) und eine Arretierschraube (32b) aufweist, wobei der Klemmriegel (32a) und die Arretierschraube (32b) schwenkrohrseitig angeordnet sind.

5. Überrollbügel (20) gemäß einem der vorhergehenden Ansprüche,
**dadurch gekennzeichnet,**
**dass** die Verbindungsglieder (30) im Bereich der Klemmriegel (32a) Aussparungen (32c) aufweisen, wobei die Aussparungen (32c) derart ausgebildet sind, dass die Klemmriegel (32a) in der Arbeitsstellung die Schwenkrohre (22) gegen die Verbindungsglieder (30) verspannen und in der Transportstellung die Schwenkrohre (22) freigeben.

6. Überrollbügel (20) gemäß einem der vorhergehenden Ansprüche,
**dadurch gekennzeichnet,**
**dass** die Standrohre (24) Dämpfungselemente im Bereich der Verbindung zum Rahmen (2) der Baumaschine (1) aufweisen.

## Claims

1. A roll bar (20) for a cab-less construction machine (1), in particular a vibration roller, which is implemented as adjustable in height between an operating position and a transport position, comprising:
a pivotable tube bow (21), which comprises two vertical pivot tubes (22);
two stand tubes (24), which are fixedly connected to the frame (2) of the construction machine (1);
two connection elements (30), via which the pivot tubes (22) are connected to the stand tubes (24), the connection elements (30) each comprising:
a stop surface (AF), against which the pivot tube (22) can be put to in the operating position;
a lock (32), with which the pivot tube (22) can be clamped against the connection element (30) in the operating position;
a welding surface (SF), to which the stand tube (24) is materially bonded; and
a pivot joint (31) having a pivot axis (A), around which the pivot tubes (22) are pivotable,
**characterized in that** the connection elements (30) each comprise two sheet-metal parts (33, 34), which are symmetrical to one another, the stop surfaces (AF) and the welding surfaces (SF) being implemented as edge profiles (35) of the sheet-metal parts (33, 34),
and the welding surfaces (SF) being oriented essentially horizontally.

2. The roll bar (20) according to Claim 1,
**characterized in that** the pivot joints (31) are implemented in such a way that the pivot axis (A) runs through the pivot tubes (22).

3. The roll bar (20) according to one of the preceding claims,
**characterized in that** the connection elements (30) are materially bonded to the stand tubes (24) using weld seams, the weld seams being at least partially peripheral fillet welds or butt welds, and being symmetrically situated with respect to the center points of the welding surfaces (SF).

4. The roll bar (20) according to one of the preceding claims,
**characterized in that** the lock (32) has a clamping bolt (32a) and a locking screw (32b), the clamping bolt (32a) and the locking screw (32b) being situated on the pivot tube side.

5. The roll bar (20) according to one of the preceding claims,
**characterized in that** the connection elements (30) have recesses (32c) in the area of the clamping bolt (32a), the recesses (32c) being implemented in such a way that the clamping bolts (32a) clamp the pivot tubes (22) against the connection elements (30) in the operating position and release the pivot tubes (22) in the transport position.

6. The roll bar (20) according to one of the preceding claims,
**characterized in that** the stand tubes (24) have damping elements in the area of the connection to the frame (2) of the construction machine (1).

## Revendications

1. Arceau anti-retournement (20) pour un engin de chantier sans cabine (1), en particulier un rouleau vibrant, qui est formé de façon réglable en hauteur entre une position de travail et une position de transport, comprenant :
un arceau tubulaire (21) pivotant qui comprend deux tubes pivotants verticaux (22) ;
deux tubes d'appui (24) qui sont reliés de façon stationnaire au châssis (2) de l'engin de chantier (1) ;
deux éléments de liaison (30) par lesquels les tubes pivotants (22) sont reliés aux tubes d'appui (24), lesquels éléments de liaison (30) comprennent chacun :
une surface de butée (AF) sur laquelle le tube pivotant (22) peut être posé dans la position de travail ;
un blocage (32) avec lequel le tube pivotant (22) peut être serré contre l'élément de liaison (30) dans la position de travail ;
une surface de soudage (SF) sur laquelle le tube d'appui (24) est relié en solidarité de matière ; et
une articulation de pivotement (31) avec un axe de pivotement (A) autour duquel les tubes pivotants (22) peuvent pivoter,
**caractérisé en ce que** les éléments de liaison (30) comprennent deux pièces en tôle (33, 34) symétriques l'une de l'autre, les surfaces de butée (AF) et les surfaces de soudage (SF) étant conformées comme un profil de bord (35) des pièces en tôle (33, 34) et les surfaces de soudage (SF) étant orientées de façon sensiblement horizontale.

2. Arceau anti-retournement (20) selon la revendication 1, **caractérisé en ce que** les articulations de pivotement (31) sont conformées de telle manière que l'axe de pivotement (A) passe à travers les tubes pivotants (22).

3. Arceau anti-retournement (20) selon l'une des revendications précédentes, **caractérisé en ce que** les éléments de liaison (30) sont reliés aux tubes d'appui (24) en solidarité de matière au moyen de soudures, lesquelles soudures sont au moins partiellement des soudures en congé circonférentielles ou des soudures bout à bout et les centres des surfaces de soudage (SF) étant disposés de façon symétrique.

4. Arceau anti-retournement (20) selon l'une des revendications précédentes, **caractérisé en ce que** le blocage (32) comprend un barre de serrage (32a) et une vis de blocage (32b), la barre de serrage (32a) et la vis de blocage (32b) étant disposées du côté du tube pivotant.

5. Arceau anti-retournement (20) selon l'une des revendications précédentes, **caractérisé en ce que** les éléments de liaison (30) présentent des évidements (32c) au niveau de la barre de serrage (32a), lesquels évidements (32c) sont conformés de telle manière que les barres de serrage (32a) serrent les tubes pivotants (22) contre les éléments de liaison (30) dans la position de travail et libèrent les tubes pivotants (22) dans la position de transport.

6. Arceau anti-retournement (20) selon l'une des revendications précédentes, **caractérisé en ce que** les tubes d'appui (24) présentent des éléments amortisseurs au niveau de la liaison avec le châssis (2) de l'engin de chantier (1).
